(19) Europäisches Patentamt
European Patent Office
Office européen des brevets

(11) **EP 2 092 792 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(21) Anmeldenummer: **07866271.5**

(22) Anmeldetag: **27.12.2007**

(51) Int Cl.:
***H04W 88/02*** *(2009.01)*

(86) Internationale Anmeldenummer:
**PCT/EP2007/011439**

(87) Internationale Veröffentlichungsnummer:
**WO 2009/083018 (09.07.2009 Gazette 2009/28)**

(54) **ENERGIEEFFIZIENTER BETRIEB EINES KOMMUNIKATIONSNETZWERKES**

ENERGY-EFFICIENT OPERATION OF A COMMUNICATION NETWORK

FONCTIONNEMENT ÉCOÉNERGÉTIQUE D'UN RÉSEAU DE COMMUNICATION

(84) Benannte Vertragsstaaten:
**DE FR IT**

(43) Veröffentlichungstag der Anmeldung:
**26.08.2009 Patentblatt 2009/35**

(73) Patentinhaber: **SIEMENS AKTIENGESELLSCHAFT**
**80333 München (DE)**

(72) Erfinder:
• **HUSAK, Jan**
  **14900 Prag (CZ)**
• **LAHNER, Frank**
  **91052 Erlangen (DE)**
• **THAMM, Peter**
  **69469 Weinheim (DE)**

(56) Entgegenhaltungen:
**EP-A- 0 726 688      EP-A- 0 740 481**
**US-A1- 2006 268 891**

EP 2 092 792 B1

## Beschreibung

Die Erfindung betrifft ein Verfahren zur drahtlosen Kommunikation zwischen einer Basisstation und mehreren bzgl. des Kommunikationskanals parametrierten oder unparametrierten Geräten, wobei die Geräte jeweils einen beschränkten Energievorrat aufweisen, und wobei die Basisstation mindestens einen Suchmodus mit mehreren Kommunikationskanälen sowie einen Normalbetriebsmodus zur Kommunikation mit aufgefundenen Geräten aufweist, bei dem in einem festen Zeitraster Synchronisationssignale auf einem der Kommunikationskanäle ausgesendet werden.

Ein derartiges Verfahren ist aus der Praxis bei Kommunikationsnetzwerken bereits bekannt. Dabei sendet ein Gerät ein Telegramm und wartet anschließend für eine begrenzte Zeitdauer auf Antwort. Trifft diese Antwort nicht ein, so wechselt das Gerät in einen Energie sparenderen Modus, der sich dadurch auszeichnet, dass wenigstens das HF-Radio ausgeschaltet ist, weil dieses der größte Energieverbraucher ist. Nachteilig ist dabei allerdings, dass das Gerät keine Rücksicht auf andere Geräte nimmt bzw. auf bereits reservierte Bandbreiten im gewählten Kanal. Ein solches Gerät sendet unsynchronisiert und kann dabei das eigene Netz oder fremde Netze stören. Alternativ hierzu ist bekannt, dass das Gerät bei hohem Energieverbrauch in einem Kanal hört, ob die Basisstation eine Kommunikation aufbauen möchte. Hierzu sind von der Basisstation gesendete Synchronisationssignale notwendig, damit das Gerät vorhandene Kommunikationspartner erkennen kann. Vorteilhaft ist hierbei, dass sich das Gerät passiv verhält und somit keine anderen Geräte stören kann. Voraussetzung hierfür ist allerdings, dass ein fester zeitlicher Bezug zwischen empfangenem Synchronisationssignal und dem nachfolgenden erlaubten Anmeldeversuch besteht. Bei sehr großen zeitlichen Abständen zwischen den Synchronisationssignalen muss das Gerät während der gesamten Zeitspanne das HF-Radio auf hören schalten und hat dabei einen hohen Energieverbrauch. Stehen mehrere Kanäle zur Auswahl, muss dort ebenso verfahren werden, was die Energiebilanz sogar noch verschlechtert.

Ein weiteres derartiges Verfahren ist aus dem Patent dokument US 2006/0268891 A1 bekannt.

Daher liegt der Erfindung die Aufgabe zu Grunde, ein Verfahren der oben genannten Art dahingehend zu verbessern, dass die Geräte bei schnellem Kommunikationsaufbau möglichst lange mit ihrem Energievorrat auskommen.

Die Aufgabe wird durch ein Verfahren mit den Merkmalen gemäß Anspruch 1 gelöst.

Vorteilhafte Weiterbildungen der Erfindung sind den Unteransprüchen 2 bis 7 zu entnehmen.

Ein Ausführungsbeispiel der Erfindung wird im Folgenden anhand einer Zeichnung näher erläutert. Es zeigen:

Fig.1    den Normalbetriebsmodus einer Basisstation,
Fig.2    (oben eine Abfolge von Synchronisationssignalen auf mehreren Kommunikationskanälen,

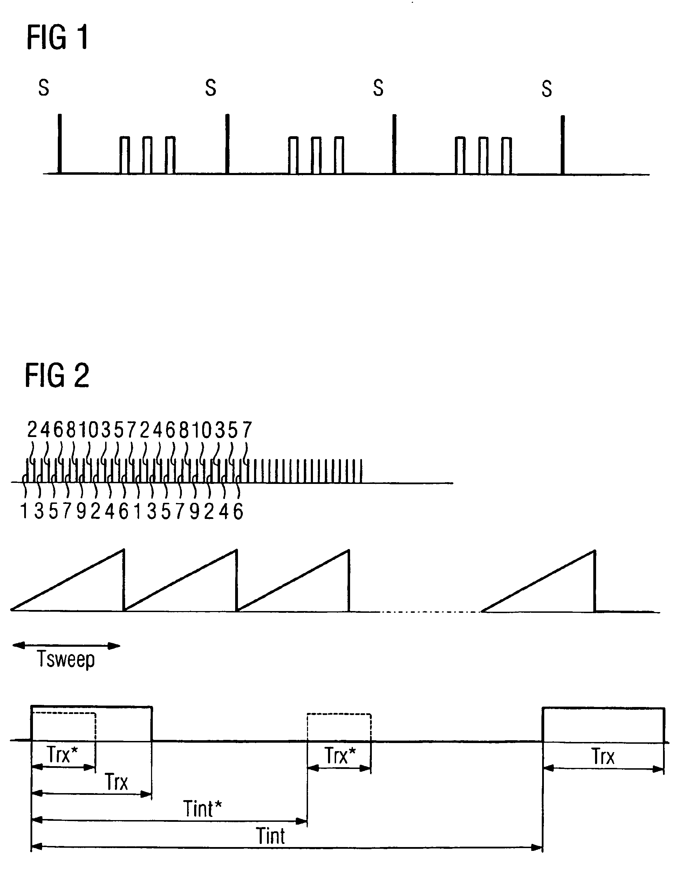

Fig.2    (mitte) mehrere aufeinander folgende Sweep-Vorgänge mit jeweils einer Abfolge von Synchronisationssignalen auf mehreren Kommunikationskanälen und
Fig.2    (unten) einen Hörmodus mit an die Sweep-Vorgänge nach Fig.3 angepasster Hördauer und mit demgegenüber verkürzter Hördauer.

Das erfindungsgemäße Verfahren bezieht sich auf die drahtlose Kommunikation zwischen einer Basisstation mit unbeschränktem Energievorrat und mehreren bezüglich des Kommunikationskanals parametrierten oder unparametrierten Geräten, die jeweils einen beschränkten Energievorrat aufweisen. Ziel ist der effiziente Betrieb eines solchen drahtlosen Kommunikationsnetzwerks. Dabei stellt sich das Problem, dass für den Verbindungsaufbau der Kommunikation die Geräte in einem Hörmodus mit einem länger eingeschalteten HF-Radio betrieben werden müssen, wobei im Vergleich zum Normalbetrieb der Stromverbrauch höher ist. Mit dem vorliegenden Kommunikationsverfahren wird erreicht, dass das jeweilige Gerät im zeitlichen Mittel nicht mehr Energie verbraucht als im Normalbetrieb. Sendet ein Gerät im Normalbetrieb beispielsweise ein Mal pro Sekunde für eine Millisekunde, so entspricht das einer Auslastung von 0,1%.

Bei einer Basisstation lassen sich drei Betriebszustände unterscheiden. Im Normalbetrieb läuft die Kommunikation mit den gefundenen und ausgewählten Geräten des Kommunikationsnetzwerks nach einem festgelegten Protokoll ab. Dieser Normalbetriebsmodus ist in Fig.1 dargestellt. Dabei wird wiederholt ein Synchronisationssignal(S) auf einem der Kommunikationskanäle(1,2,3...16) von der Basisstation ausgesendet. Zwischen zwei Synchronisationssignalen (S) werden in einem festen Zeitraster Kommunikationszeitblöcke zur Kommunikation zwischen der Basisstation und den verbundenen Geräten vorgehalten. Daneben weist die Basisstation zwei Suchmodi zum Verbindungsaufbau mit den Geräten auf. In einem ersten Suchmodus wird nach Geräten auf allen oder ausgewählten parametrierten oder unparametrierten Kommunikationskanälen gesucht. In einem zweiten Suchmodus erfolgt die Suche nach Geräten auf einem festgelegten Kommunikationskanal.

Bei den Geräten können zwei Kommunikationszustände auftreten. Ein parametriertes Gerät ist zur Kommunikation auf einem festgelegten Kanal bereit. Ein unparametriertes Gerät besitzt zwar einen beliebigen Default-Kanal, kann diesen aber nach festzulegenden Kriterien auch wechseln.

Ein Gerät weiß grundsätzlich nach dem Einschalten nicht, in welchem Modus sich die Basisstation befindet und ob diese überhaupt vorhanden ist. Es muss sich demnach immer gleich verhalten. Ein Gerät, das unsynchronisiert sendet, kann das eigene Netz oder fremde Netze stören. Um dies zu vermeiden, dürfen nach dem erfindungsgemäßen Verfahren die Geräte nicht senden. Stattdessen sollen die Geräte lediglich hören und dies möglichst wenig.

In einer Initialisierungsphase findet kein produktiver Datenaustausch zwischen der Basisstation und den Geräten statt. Die Basisstation ist demzufolge in der Lage, in einer Abfolge Synchronisationssignale (S) nacheinander auf allen gewünschten Kommunikationskanälen auszusenden und nach jedem Synchronisationssignal(S) eine kurze Zeitspanne auf mögliche Antworten zu warten. In Fig. 2 oben sind beispielhaft die Kommunikationskanäle dargestellt, auf denen jeweils mindesten ein Synchronisationssignal(S) gesendet wird. Diesen Sweep-Vorgang wiederholt die Basisstation nach Fig. 2 mitte bis ein bestimmtes Endekriterium erreicht ist, z.B. Timeout, alle parametrierten Geräte vorhanden, etc. In der Zeit Tsweep werden alle gewünschten Kommunikationskanäle(1,2,3...16) abgescannt. Ist die Zahl der abzusuchenden Kommunikationskanäle kleiner als die maximale Anzahl, werden die fehlenden Kommunikationskanäle durch Wiederholungen aufgefüllt. Werden beispielsweise von maximal 16 Kommunikationskanälen nur 10 verwendet (s.Fig.2 oben), ist eine mögliche Abfolge 1,2,3,...,10,1,2,3...6;1,2,3..., 10, 7, 8, 9,10,1,2; 1,2,3....,10,3,4,5..,8; usw.

Dauert zum Beispiel ein Synchronisationssignal mit reserviertem Antwortzeitintervall 4ms, so ergibt sich bei 16 Kommunikationskanälen die Zeit Tsweep 16*4=64ms.

Ein Gerät hört während einer einstellbaren Hördauer Trx gemäß Fig.2 unten, die mindestens gleich oder ein wenig größer als die Zeit Tsweep ist, d.h. etwa 1 Antwortzeitintervall größer als die Zeit Tsweep. Hierbei kann das Gerät auf einem parametrierten oder unparametrierten Kommunikationskanal arbeiten. In diesem Fall ist gewährleistet, dass das Gerät auf seinem Kommunikationskanal ein Synchronisationssignal empfängt und entsprechend antworten kann. Die Verbindung zur Basisstation ist damit hergestellt. Im seltenen Fall eines Zugriffskonflikts mit einem anderen Gerät wird der Vorgang in der nächsten Hörphase wiederholt. Das Zeitfenster mit der Hördauer Trx wird nach einer ebenfalls einstellbaren Wiederholdauer Tint wiederholt. In den Zeitabschnitten außerhalb der Hördauer Trx wird das jeweilige Gerät in einen Energiesparmodus geschaltet. Im Energiesparmodus sind Verbraucher wie z.B. das HF-Radio abgeschaltet.

Die Länge der Hördauer Trx, die Wiederholfrequenz Fw(=1/Tint) und der Energieverbrauch im Energiesparmodus sind für das jeweilige Gerät derart aufeinander abgestimmt, dass sein Energieverbrauch bis zum Verbindungsaufbau im zeitlichen Mittel den Energieverbrauch im Normalbetrieb nicht übersteigt, wobei das Gerät im Normalbetriebsmodus , z.B. durch Kommunikation mit der Basisstation, einen bestimmten Energieverbrauch aufweisen kann.

Bei einer zulässigen Auslastung des Geräts von beispielsweise 0,1% und einer Hördauer Trx von 60 ms ergibt sich eine Wiederholdauer Tint von 60s. Dies bedeutet, dass nach ca. 60s alle Geräte auf allen Kommunikationskanälen erfasst sind.

Die Wiederholdauer Tint des Hörvorgangs ergibt sich zu

$$Tint = \frac{Enormal - P\ddot{h}\ddot{o}r*Trx}{Pspar} + Trx$$

Enormal:    Energieverbrauch im Normalbetriebsmodus während der Dauer Tint
Phör*Trx :    Energieverbrauch während des Hörvorgangs
Trx:    Hördauer
Pspar:    Leistung im Energiesparmodus

Wird die Hördauer Trx gem. Fig.2 unten auf die Hördauer Trx* verkleinert, beispielsweise halbiert, kann bei unveränderter Auslastung dementsprechend die Wiederholdauer Tint auf die Wiederholdauer Tint* verkürzt werden. Die Hördauer Trx* ist kleiner als die Zeit Tsweep. In diesem Fall müssen zwei aufeinander folgende Hörvorgänge derart zeitversetzt erfolgen, dass Kommunikationskanäle, die beim ersten Hörvorgang nicht erfasst wurden zumindest beim nächsten Hörvorgang erfasst werden. Die kürzere Wiederholdauer Tint* erhöht die Wahrscheinlichkeit für einen schnellen Verbindungsaufbau.

Der beschriebene Verbindungsaufbau gilt für parametrierte und unparametrierte Geräte in gleicher Weise, d.h. ist unter denselben Zeitverhältnissen zu erreichen.

Bei dem weiteren, bereits oben genannten Suchmodus ist die Basisstation so parametriert, dass sie ein Netzwerk auf einem vorgegebenen Kommunikationskanal aufbaut. Dabei wird sie nicht alle Kommunikationskanäle durchscannen, sondern stattdessen auf demselben parametrierten Kommunikationskanal Synchronisationssignale (S) aussenden. Hierbei sendet die Basisstation zum Verbindungsaufbau mit den Geräten eine Abfolge von Synchronisationssignalen(S) auf einem der Kommunikationskanäle (1,2,3...16), die von einer Abfolge von Synchronisationssignalen(S) auf einem anderen der Kommunikationskanäle (1, 2, 3...16) gefolgt wird.

Für diesen Fall ergeben sich bei einem parametrierten Gerät zwei Möglichkeiten. Ist das Gerät auf einen anderen Kommunikationskanal eingestellt, wird korrekterweise kein Kontakt zu Stande kommen. Offensichtlich soll dann das Gerät einem anderen Netzwerk zugeordnet sein. Stimmen andererseits die parametrierten Kommunikationskanäle über ein, dann wird das Gerät innerhalb der nächsten Hörphase auf ein Synchronisationssignal (S) reagieren. Auch hier wird dies ebenso wie bei dem oben genannten Suchmodus spätestens nach der Wiederholdauer Tint der Fall sein. Da die Synchronisationssignale (S) auf demselben Kommunikationskanal aber wesentlich häufiger auftreten als bei den obigen genannten Sweep-Vorgängen, ist hierbei die durchschnittliche Zeit für den Verbindungsaufbau geringer.

Dies gilt auch für den Verbindungsaufbau mit unparametrierten Geräten. Stimmt der Default-Kanal des Geräts mit dem Kommunikationskanal der Basisstation über-ein, kann eine Anmeldung erfolgen. Im Allgemeinen wird dies aber eher nicht der Fall sein. Es hängt von den Anforderungen ab, wie ein unparametriertes Geräts in dem Netzwerk behandelt werden soll. Dabei lassen sich zwei Möglichkeiten unterscheiden.

Im ersten Fall werden unparametrierte Geräte nicht berücksichtigt. Wenn der Default-Kanal nicht mit dem Kommunikationskanal der Basisstation überein stimmt, findet keine Kontaktaufnahme statt und der Vorgang wird beendet. Im seltenen Fall der zufälligen Übereinstimmung der beiden Kommunikationskanäle wird das Gerät von der Basisstation nicht akzeptiert, weil es unparametriert ist. Das unparametrierte Gerät wechselt dann selbstständig seinen Default-Kanal.

Im zweiten Fall sollen unparametrierte Geräte berücksichtigt werden. Dies hätte den Vorteil, dass beispielsweise defekte Geräte durch neue ausgetauscht werden könnten, ohne dass irgendwelche zusätzlichen parametrierten Hilfsmittel erforderlich wären. Da bei der vorliegenden Konfiguration der Kommunikationskanal der Basisstation nicht variiert, muss dies auf Geräteseite erfolgen. Wenn das Gerät periodisch langsam die Kommunikationskanäle variiert, können so auch nicht suchende Basisstationen anhand ihrer Synchronisationssignale gefunden werden. Voraussetzung dafür ist, dass das Suchintervall des Geräts und das Intervall der Synchronisationssignale im Normalbetrieb der Basisstation sich über die Zeit verschieben. Dies ist durch entsprechende Einstellung am Gerät einfach zu realisieren.

Im Wesentlichen werden mit dem erfindungsgemäßen Verfahren folgende Vorteile erreicht:

- der Aufbau des drahtlosen Kommunikationslinks verbraucht nicht mehr Energie als das Gerät im Normalbetrieb,
- die Geräte hören stets und verhalten sich damit immer passiv,
- durch die Stückelung der Hördauer über einen oder mehrere Kommunikationskanäle kann die Suchdauer reduziert werden.

**Patentansprüche**

1. Verfahren zur drahtlosen Kommunikation zwischen einer Basisstation und mehreren bzgl. des Kommunikationskanals parametrierten oder unparametrierten Geräten, wobei die Geräte jeweils einen beschränkten Energievorrat aufweisen, und wobei die Basisstation mindestens einen Suchmodus mit mehreren Kommunikationskanälen (1,2,3...16) sowie einen Normalbetriebsmodus zur Kommunikation mit aufgefundenen Geräten aufweist, bei dem in einem festen Zeitraster Synchronisationssignale (S) auf einem der Kommunikationskanäle (1,2,3...16) ausgesendet werden, in folgenden Schritten:

   a) die Basisstation sendet zum Verbindungsaufbau mit den Geräten eine Abfolge von Synchronisationssignalen (S) auf mindestens einem ihrer Kommunikationskanäle (1,2,3...16),
   b) die Geräte hören jeweils auf ihrem parametrierten oder unparametrierten Kommunikationskanal innerhalb einer für das jeweilige Gerät einstellbaren Hördauer (Trx) mit einer ebenfalls für das jeweilige Gerät einstellbaren Wiederholfrequenz,
   c) in zumindest einigen Zeitabschnitten außerhalb der Hördauer (Trx) wird das jeweilige Gerät in einen Energiesparmodus geschaltet,
   d) die Länge der Hördauer(Trx), die Wiederholfrequenz und der Energieverbrauch im Energiesparmodus sind für das jeweilige Gerät derart aufeinander abgestimmt, dass sein Energieverbrauch bis zum Verbindungsaufbau im zeitlichen Mittel den Energieverbrauch im Normalbetriebs modus nicht übersteigt, wobei das Gerät im Normalbetriebsmodus , z.B. durch Kommunikation mit der Basisstation, einen bestimmten Energieverbrauch aufweist.

2. Verfahren zur drahtlosen Kommunikation nach Anspruch 1, **dadurch gekennzeichnet, dass** die Basisstation zum Verbindungsaufbau mit den Geräten eine Abfolge von Synchronisationssignalen (S) auf einem der Kommunikationskanäle (1,2,3...16) sendet, die von einer Abfolge von Synchronisationssignalen(S) auf einem anderen der Kommunikationskanäle(1,2,3...16) gefolgt wird.

3. Verfahren zur drahtlosen Kommunikation nach Anspruch 1, **dadurch gekennzeichnet, dass** die Basisstation mehrere Sweep-Vorgänge nacheinander zum Verbindungsaufbau mit den Geräten durchführt, wobei bei jedem Sweep-Vorgang eine Abfolge von Synchronisationssignale auf unterschiedlichen Kommunikationskanälen (1, 2, 3...16) erfolgt.

4. Verfahren zur drahtlosen Kommunikation nach einem der vorangehenden Ansprüche, **dadurch gekennzeichnet, dass** das jeweilige Gerät seine Kommunikationskanäle(1,2,3...16) variiert.

5. Verfahren zur drahtlosen Kommunikation nach Anspruch 4,**dadurch gekennzeichnet, dass** die Variation der Kommunikationskanäle (1,2,3...16) periodisch erfolgt.

6. Verfahren zur drahtlosen Kommunikation nach Anspruch 4, **dadurch gekennzeichnet, dass** in dem jeweiligen Gerät nach Betrieb auf einem der Kommunikationskanäle (1,2,3...16) für einen längeren Zeitabschnitt dieser von einem anderen der Kommunikationskanäle (1,2,3...16) abgelöst wird.

7. Verfahren zur drahtlosen Kommunikation nach einem der vorangehenden Ansprüche, **dadurch gekennzeichnet, dass** der Energiesparmodus für die gesamte Dauer außerhalb der Hörzeiten (Trx) eingeschaltet wird.

**Claims**

1. Method for wireless communication between a base station and a plurality of appliances which are parameterized or unparameterized in terms of the communication channel, wherein the appliances each have a limited supply of power, and wherein the base station has at least one search mode with a plurality of communication channels (1, 2, 3 ... 16) and also a normal mode of operation for communication with found appliances, in which synchronization signals (S) are transmitted on one of the communication channels (1, 2, 3 ... 16) in a fixed time base, in the following steps:

   a) the base station sends a sequence of synchronization signals (S) on at least one of its communication channels (1, 2, 3 ... 16) for the purpose of setting up a connection to the appliances,
   b) the appliances each listen on their parameterized or unparameterized communication channel within a listening period (Trx) which can be set for the respective appliance, at a repetition rate which can likewise be set for the respective appliance,
   c) in at least a few time periods outside the listening period (Trx) the respective appliance is switched to a power saving mode,
   d) the length of the listening period (Trx), the repetition rate and the power consumption in the power saving mode are attuned to one another for the respective appliance such that the power consumption thereof up to connection setup does not exceed the power consumption in the normal mode of operation on average over time, wherein the appliance has a particular power consumption in the normal mode of operation, e.g. as a result of communication with the base station.

2. Method for wireless communication according to Claim 1, **characterized in that** the base station sends a sequence of synchronization signals (S) on one of the communication channels (1, 2, 3 ... 16) for the purpose of setting up a connection to the appliances, which sequence is followed by a sequence of synchronization signals (S) on another of the communication channels (1, 2, 3 ... 16).

3. Method for wireless communication according to Claim 1, **characterized in that** the base station performs a plurality of sweep operations in succession for the purpose of setting up a connection to the appliances, wherein each sweep operation involves a sequence of synchronization signals on different communication channels (1, 2, 3 ... 16).

4. Method for wireless communication according to one of the preceding claims, **characterized in that** the respective appliance varies its communication channels (1, 2, 3 ... 16).

5. Method for wireless communication according to Claim 4, **characterized in that** the communication channels (1, 2, 3 ... 16) are varied periodically.

6. Method for wireless communication according to Claim 4, **characterized in that** operation on one of the communication channels (1, 2, 3 ... 16) for a relatively long period of time is followed in the respective appliance by said communication channel being superseded by another of the communication channels (1, 2, 3 ... 16).

7. Method for wireless communication according to one of the preceding claims, **characterized in that** the power saving mode is engaged for the entire period outside the listening times (Trx) .


**Revendications**

1. Procédé de communication sans fil entre une station de base et plusieurs appareils paramétrés ou non paramétrés en ce qui concerne le canal de communication, les appareils ayant respectivement une réserve d'énergie limitée, et dans lequel la station de base a au moins un mode de recherche ayant plusieurs canaux ( 1, 2, 3...16 ) de communication, ainsi qu'un mode de fonctionnement normal pour la communication avec des appareils trouvés, dans lequel, dans une trame de temps fixe, des signaux ( S ) de synchronisation sont envoyés sur l'un des canaux ( 1, 2, 3...16) de communication, en les stades suivantes :

   a) la station de base envoit pour l'établissement de la liaison avec les appareils, une succession de signaux ( S ) de synchronisation sur au moins l'un de ses canaux ( 1, 2, 3...16 ) de communication,

   b) les appareils écoutent respectivement sur le canal de communication paramétré ou non paramétré, à l'intérieur d'une durée ( Trx ) d'écoute réglable pour l'appareil respectif avec une fréquence de répétition réglable également pour l'appareil respectif,

   c) dans au moins quelques créneaux temporels, à l'extérieur de la durée ( Trx ) d'écoute, l'appareil respectif est mis dans un mode d'économie d'énergie,

   d) la longueur de la durée ( Trx ) d'écoute, la fréquence de répétition et la consommation d'énergie sont adaptées les unes aux autres dans le mode d'économie pour l'appareil respectif, de manière à ce que sa consommation d'énergie, jusqu'à l'établissement de la liaison, ne dépasse pas en moyenne dans le temps la consommation d'énergie dans le mode de fonctionnement normal, l'appareil ayant, dans le mode de fonctionnement normal, par exemple par communication avec la station de base, une consommation d'énergie déterminée.

2. Procédé de communication sans fil suivant la revendication 1, **caractérisé en ce que** la station de base envoie, pour l'établissement de la liaison avec les appareils, une succession de signaux ( S ) de synchronisation sur l'un des canaux ( 1, 2, 3...16 ) de communication, qui est suivie d'une succession de signaux ( S ) de synchronisation sur un autre des canaux ( 1, 2, 3...16 ) de communication.

3. Procédé de communication sans fil suivant la revendication 1, **caractérisé en ce que** la station de base effectue plusieurs opérations sweep les unes après les autres pour l'établissement de la liaison avec les appareils, une succession de signaux de synchronisation sur des canaux ( 1, 2, 3...16 ) différents s'effectuant pour chaque opération sweep.

4. Procédé de communication sans fil suivant l'une des revendications précédentes, **caractérisé en ce que** chaque appareil modifie ses canaux ( 1, 2, 3...16 ) de communication.

5. Procédé de communication sans fil suivant la revendication 4, **caractérisé en ce que** la modification des canaux ( 1, 2, 3...16 ) de communication s'effectue périodiquement.

6. Procédé de communication sans fil suivant la revendication 4, **caractérisé en ce que** dans l'appareil respectif, après fonctionnement sur l'un des canaux ( 1, 2, 3...16 ) de communication, pendant un créneau temporel assez long, celui-ci est séparé d'un autre des canaux ( 1, 2, 3...16 ) de communication.

7. Procédé de communication sans fil suivant l'une des revendications précédentes, **caractérisé en ce que** le mode d'économie d'énergie est établi pendant toute la durée à l'extérieur des temps ( Trx ) d'écoute.

# FIG 1

S         S         S         S

# FIG 2

2 4 6 8 10 3 5 7 2 4 6 8 10 3 5 7

1 3 5 7 9 2 4 6 1 3 5 7 9 2 4 6

Tsweep

Trx*     Trx*     Trx

Trx

Tint*

Tint

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060268891 A1